# EUROPEAN PATENT SPECIFICATION

(11) **EP 2 638 504 B1**
(45) Date of publication and mention of the grant of the patent: **03.09.2014**
(21) Application number: 11782281.7
(22) Date of filing: 24.10.2011
(51) Int. Cl.: G06K 7/10

(54) **POINT-OF-TRANSACTION, DUAL WINDOW WORKSTATION FOR IMAGING INDICIA WITH A SINGLE IMAGER AND A STATIONARY OPTICAL SYSTEM**
TRANSAKTIONSPUNKT-ARBEITSPLATZ MIT ZWEI FENSTERN ZUR ABBILDUNG VON MARKIERUNGEN MIT EINEM EINZIGEN BILDGERÄT UND EINEM STATIONÄREN OPTISCHEN SYSTEM
STATION DE TRAVAIL DE POINT DE TRANSACTION À DOUBLE FENÊTRE POUR FORMER L'IMAGE D'INDICES À L'AIDE D'UN SEUL IMAGEUR ET DE SYSTÈME OPTIQUE FIXE

(30) Priority: 11.11.2010 US 944249
(43) Date of publication of application: 18.09.2013
(73) Proprietor: Symbol Technologies, Inc., Holtsville, NY 11742 (US)
(72) Inventor: DRZYMALA, Mark,, Commack New York 11725 (US); BARKAN, Edward,, Miller Place New York 11764 (US)
(74) Representative: Schäflein, Christian Georg
(86) International application number: PCT/US2011/057446
(87) International publication number: WO 2012/064496

(56) References cited:
- EP-A2- 1 223 535
- US-A1- 2010 163 622
- US-A1- 2010 270 376

## Description

### BACKGROUND OF THE INVENTION

It is known to use laser-based and/or imager-based readers in a dual window or bi-optical workstation to electro-optically read indicia, such as bar code symbols, associated with three-dimensional products to be identified and processed, e.g., purchased, at a point-of transaction workstation provided at a countertop of a checkout stand in supermarkets, warehouse clubs, department stores, and other kinds of retailers. The products are typically slid or moved across, or presented to a central region of, a generally horizontal window that faces upwardly above the countertop and/or a generally vertical or upright window that vertically faces a user at the workstation. When at least one laser scan line generated by a laser-based reader sweeps over a symbol and/or when return light from the symbol is captured over a field of view by a solid-state imager of an imager-based reader, the symbol is then processed, decoded and read, thereby identifying the product.

The symbol may be located low or high, or right to left, on the product, or anywhere in between, on any of six sides of the product. The symbol may be oriented in a "picket fence" orientation in which elongated parallel bars of a one-dimensional Universal Product Code (UPC) symbol are vertical, or in a "ladder" orientation in which the UPC symbol bars are horizontal, or at any orientation angle in between. The products may be held by the user at various tilt angles during their movement across, or presentation to, either window. The products may be positioned either in contact with, or held at a distance away from, either window during such movement or presentation. All these factors make the symbol location variable and difficult to predict in advance.

In such an environment, it is important that the readers at the workstation provide a full coverage scan zone above the horizontal window and in front of the vertical window so that the scan zone extends down as close as possible to the countertop, and sufficiently high above the countertop, and as wide as possible across the width of the countertop. The scan zone projects into space away from the windows and grows in volume rapidly in order to cover symbols on products that are positioned not only on the windows, but also many inches therefrom. The scan zone must be large enough to read symbols positioned in any possible way across the entire volume of the scan zone and must not have any dead areas in which symbols are not covered and, therefore, cannot be read.

As advantageous as workstations with laser-based readers have been in processing transactions, workstations with imager-based readers, also known as imagers, are thought to offer improved reliability and have the added capability of reading indicia other than UPC symbols, such as two-dimensional or stacked or truncated symbols, as well as the capability of imaging non-symbol targets, such as receipts, driver's licenses, signatures, etc. It was initially thought that an all imager-based workstation would require about ten to twelve imagers in order to provide a full coverage scan zone to enable reliable reading of indicia that could be positioned anywhere on all six sides of a three-dimensional product. However, to bring the cost of the imager-based workstation down to an acceptable level, it is known to reduce the need for so many imagers by splitting the field of view of at least one imager into light collection regions, or by moving the entire field of view of an imager to successively face each window of the workstation.

However, such light collection regions produced by splitting the field of view in the known imager-based workstation do not fully occupy the scan zone. As a result, the scan zone does not have full coverage and has dead areas in which indicia cannot be read. Also, moving the entire field of view of an imager to successively face each window of the workstation takes time and requires synchronization at least between the moving component and the imager. In some applications, it might be desirable for increased imaging responsiveness to image the indicia simultaneously through both windows and, therefore, moving the entire field of view with its inherent timing delay is disadvantageous. In addition, the moving component, as compared to a stationary component, has a shorter working lifetime, is more prone to failure, and often generates dust that can deposit and build up on optical surfaces, thereby degrading overall imaging performance and efficiency.

US 2010/163622 discusses a monolithic compound mirror structure. The features in the preamble of claim 1 are known from this document. US 2010/270376 discusses an optical code or data imaging system and method.

### SUMMARY OF THE INVENTION

This invention relates to a point-of transaction workstation as defined by claim 1, for electro-optically imaging indicia associated with multi-sided products. The indicia are preferably bar code symbols that are electro-optically read in order to identify products being purchased at the workstation. The workstation is a bi-optical or dual window workstation having a generally horizontal window supported by a housing and located in a generally horizontal plane, and an upright window, also supported by the housing, and located in a generally upright plane that intersects the generally horizontal plane. The upright plane may lie in a vertical plane, or be slightly rearwardly or forwardly inclined relative to the vertical plane.

The products are passed by an operator or a customer through a scan zone, which occupies the space at and above the horizontal window, and also occupies the space at and in front of the upright window.

In accordance with this invention, a plurality of solid-state imagers is not supported by the housing, but instead, a single imager is used to capture return light passing from the indicia through either or both windows. The single imager has a sensor array of sensors with a field of view and preferably comprises a two-dimensional, charge coupled device (CCD) array, or a complementary metal oxide semiconductor (CMOS) array, of sensors of megapixel size, e.g., 1280 pixels wide x 960 pixels high. The single imager includes an imaging lens assembly for capturing the return light from the indicia and for projecting the captured return light onto the sensor array. The single imager may also include one or more illuminators for illuminating the indicia with illumination light from illumination light sources, e.g., light emitting diodes (LEDs). The LEDs may be adjacent to, or remote from, the sensor array.

A controller or programmed microprocessor is operative for controlling the illuminators to illuminate the indicia, for controlling the imager to capture the illumination light returning from the indicia in successive frames over an exposure time period to produce electrical signals indicative of the indicia being read, and for processing the electrical signals, especially to decode the indicia when the indicia is a symbol. The illuminators are preferably only operative during the exposure time period.

In accordance with this invention, an optical system is used with the single imager, and includes a first optical subsystem that is stationarily supported by the housing and that directs at least a part of the field of view of the single imager as a first light collection region or regions passing through one of the windows, and a second optical subsystem that is also stationarily supported by the housing and that directs at least a part of the field of view of the single imager as a second light collection region or regions passing through the other of the windows. The stationary optical subsystems avoid the prior art use of a moving component that requires time to direct the field of view through each window, as well as synchronization at least between the moving component and the imager. Simultaneous imaging of the indicia through both windows can now be effected. The working lifetime of the workstation is thus prolonged. Component failure is thus decreased. Dust generation is thus eliminated.

The first optical subsystem includes an optical splitter above the single imager for splitting the field of view into a pair of first subfields of view in a first split. The optical splitter is preferably a mirrored component having one reflecting surface above one portion of the sensor array, and another reflecting surface above another portion of the sensor array. In the case of the megapixel sensor array described above, each half is 1280 pixels wide x 480 pixels high. The first optical subsystem further includes two pairs of fold mirrors, each pair of fold mirrors being positioned in a respective first subfield of view for splitting the respective first subfield of view into a pair of asymmetrical second subfields of view in a second split. The first optical subsystem still further includes two additional pairs of fold mirrors, each additional pair of fold mirrors being positioned in a respective asymmetrical second subfield of view for reflecting the respective second subfield of view as asymmetrical light collection regions through the one window, e.g., the generally horizontal window.

Thus, the first optical subsystem twice splits the field of view of the single imager as a result of said first and second splits into two light collection regions of substantially equal smaller spatial volume and two more light collection regions of substantially equal larger spatial volume. All four of the light collection regions pass through the horizontal window along different intersecting directions to cover four sides of the product. Thus, one larger light collection region is customized to read the left side and the bottom of the product; another larger light collection region is customized to read the right side and the bottom of the product; and each smaller light collection region is customized to read the front of the product. The smaller and the larger light collection regions are appropriately sized to perform their different tasks. All four of the light collection regions are derived from just the one single imager, thereby significantly reducing workstation costs. All four of these light collection regions, together with the additional light collection region or regions described below that pass through the upright window, substantially fully occupy the scan zone. As a result, any dead areas in the scan zone in which indicia cannot be read are significantly minimized.

The second optical subsystem, in one embodiment, includes a third stationary reflecting surface on the aforementioned optical splitter and located above still another portion of the sensor array for splitting the field of view of the single imager into a third subfield of view, and one or more fold mirrors positioned relative to the third reflecting surface for reflecting the third subfield of view as an additional light collection region through the other window, e.g., the upright window. The entire third subfield of view may be reflected through the upright window, or the third subfield of view may be split again into a plurality of additional light collection regions, in which the back and top of the product are covered. Thus, indicia on the fifth and the sixth side of the product are read. In this embodiment, the light collection regions derived from the field of view of the single imager simultaneous image the indicia through both windows, thereby enhancing imaging responsiveness.

The workstation may include a pair of the aforementioned illuminators, one at each window, for illuminating the indicia with illumination light of different wavelengths, in which case the controller alternately energizes the illuminators during different frames of the single imager. In another embodiment, the second optical subsystem includes a stationary dichroic mirror positioned in the field of view of the single imager for transmitting the illumination light of one wavelength to the single imager in one of the frames in a transmitting state in which the indicia is imaged through the horizontal window, and for reflecting the illumination light of another wavelength to the single imager in another of the frames in a reflecting state in which the indicia is imaged through the upright window. In this embodiment, the light collection regions derived from the field of view of the single imager successively image the indicia through the windows, but no moving component is used to delay processing.

In still another embodiment, the second optical subsystem includes a stationary electrochromic mirror positioned in the field of view of the single imager. The electrochromic mirror has a light transmission property that changes in response to an applied voltage. The controller supplies the voltage to the electrochromic mirror to change the light transmission property between a transmitting state in which the return light is transmitted to the single imager and in which the indicia is imaged through the horizontal window, and a reflecting state in which the return light is reflected to the single imager and in which the indicia is imaged through the upright window. In this other embodiment, the light collection regions derived from the field of view of the single imager successively image the indicia through the windows, but no moving component is used to delay processing.

By way of numerical example, the generally horizontal window in a conventional bi-optical workstation measures about four inches in width by about six inches in length, and the generally upright window measures about six inches in width by about eight inches in length. The field of view of the single imager capturing illumination light through a respective window does not inherently have these dimensions at the respective window and, hence, the light collection regions must be sized so that they match the dimensions of the respective window at the respective window, thereby enabling indicia to be reliably read when located anywhere in the scan zone at the respective window, as well as within a range of working distances therefrom.

In accordance with another aspect of this invention, a method of electro-optically imaging indicia associated with multi-sided products passing through a point-of-transaction workstation, is performed by placing the indicia in a zone bounded by a generally horizontal window lying in a generally horizontal plane, and by another upright window lying in a generally upright plane that intersects the generally horizontal plane, capturing return light from the indicia over a field of view of a sensor array of sensors of a single, solid-state imager, directing at least a part of the field of view of the single imager as a first light collection region passing through one of the windows by a first optical subsystem that is stationarily supported by the workstation, directing at least another part of the field of view of the same single imager as a second light collection region passing through the other of the windows by a second optical subsystem that is stationarily supported by the workstation, and controlling the single imager and processing captured return light in at least one of the light collection regions,
wherein the directing step by the first optical subsystem is performed by splitting the field of view into a pair of first subfields of view in a first split, and
characterized in that:
the directing step by the first optical subsystem is performed by positioning each pair of two pairs of fold mirrors in a respective first subfield of view for splitting the respective first subfield of view into a pair of asymmetrical second subfields of view in a second split.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 is a perspective view of a dual window, bi-optical, point-of-transaction workstation or imaging reader operative for reading indicia on a multi-sided product passing through the workstation by image capture in accordance with this invention;
FIG. 2 is a broken-away, perspective view of an optical system in accordance with one embodiment of this invention in the workstation of FIG. 1 diagrammatically depicting how the field of view of the single imager is simultaneously split for routing through the horizontal and upright windows;
FIG. 3 is a perspective, enlarged, close-up view of a detail of FIG. 2;
FIG. 4 is a top, perspective view of the optical system of FIG. 2 diagrammatically depicting a larger light collection region passing through a horizontal window;
FIG. 5 is a top, perspective view of the optical system of FIG. 2 diagrammatically depicting a smaller light collection region passing through a horizontal window;
FIG. 6 is a broken-away, side view of a detail of FIG. 2 diagrammatically depicting how the field of view of the single imager is simultaneously split for routing through the horizontal and upright windows;
FIG. 7 is an enlarged, diagrammatic top plan view of the sensor array of the imager of FIG. 2 in relation to an optical splitter from the optical system of FIG. 2;
FIG. 8 is a side view of an optical system in accordance with another embodiment of this invention in the workstation of FIG. 1 depicting a mirror in a reflecting state for successively splitting the field of view of the single imager between the horizontal and upright windows;
FIG. 9 is a view analogous to FIG. 8 depicting the mirror in a transmitting state; and
FIG. 10 is a top, perspective view of the workstation of FIG. 1 depicting illuminators for illuminating indicia.

### DETAILED DESCRIPTION OF THE PREFERRED EMBODIMENTS

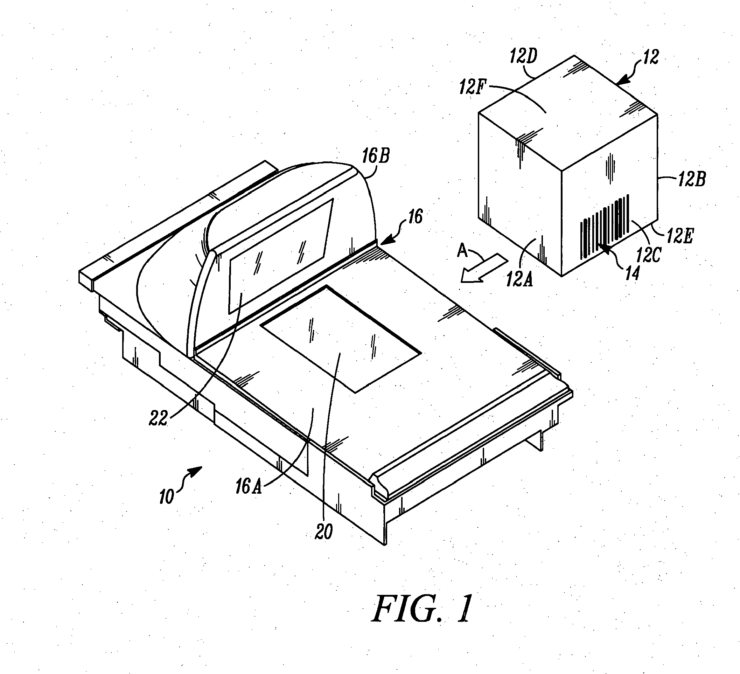

FIG. 1 depicts a dual window, bi-optical, point-of transaction workstation 10 for electro-optically imaging indicia 14 or targets, such as the illustrated UPC symbol described above, associated with multi-sided, three-dimensional products 12, and is typically used by retailers to process transactions involving the purchase of the products 12 bearing, or printed with, the identifying indicia 14. The workstation 10 includes a housing 16 having a generally horizontal window 20 located in a generally horizontal plane and supported by a horizontal housing portion 16A, and an upright window 22 located in a generally upright plane that intersects the generally horizontal plane and supported by a raised housing portion 16B. The upright plane may lie in a vertical plane, or be slightly rearwardly or forwardly inclined relative to the vertical plane. The upright window 22 is preferably recessed within the housing portion 16B to resist scratching. The products are passed by an operator or a customer through a scan zone, which occupies the space at and above the horizontal window 20, and also occupies the space at and in front of the upright window 22.

The indicia 14 need not be a UPC symbol as illustrated, but could be another one-dimensional symbol of a different symbology, or any two-dimensional symbol, or stacked symbol, or various lengths of a truncated symbol of the type typically found on frequent shopper cards, coupons, loyalty cards. The indicia 14 could also be a non-symbol target, such as a personal check, a credit card, a debit card, a signature, a driver's license, the consumer himself or herself, or the operator himself or herself. Capturing an image of the driver's license is particularly useful since many licenses are encoded with two-dimensional indicia bearing age information, which is useful in validating a customer's age and the customer's ability to purchase age-related products, such as alcoholic beverages or tobacco products. Capturing an image of the operator is used for video surveillance for security purposes. Thus, it can be determined if the operator is actually scanning the products, or passing them around the windows in an effort to bypass the windows and not charge the customer in a criminal practice known in retailing as "sweethearting".

The product 12 need not be a three-dimensional box as illustrated, but can be any object having a left side 12A, a right side 12B, a front side 12C, a rear side 12D, a bottom side 12E, and a top side 12F. The product 12 is slid or moved by an operator or a customer across and past the windows 20, 22 in the direction of the arrow A through the scan zone, or is presented to a central region of either window. As described above, the product 12 can be tilted or moved in other directions through the workstation 10.

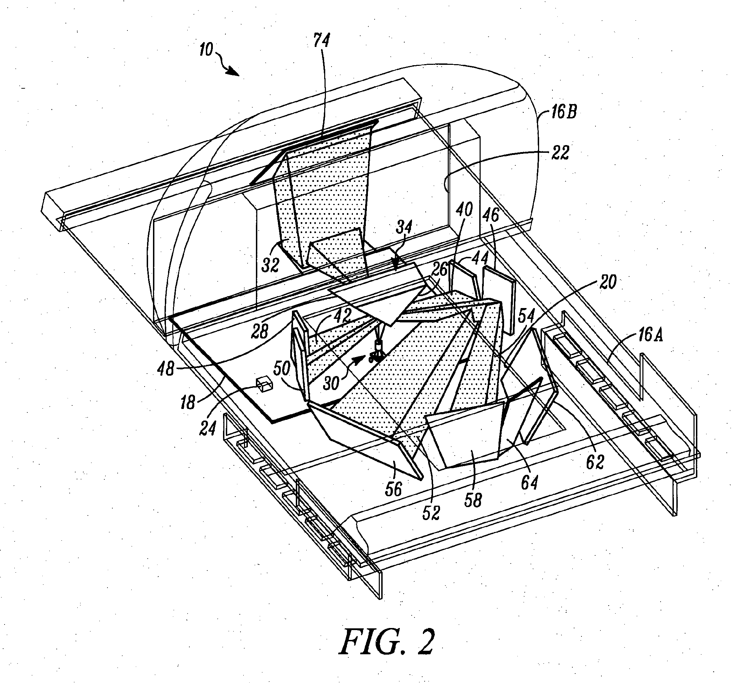

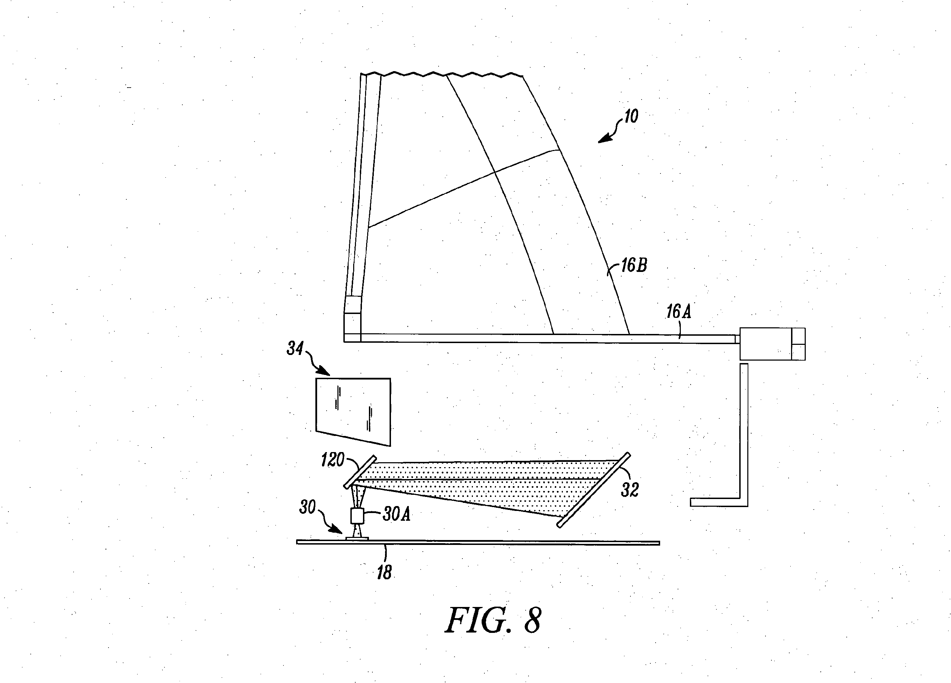

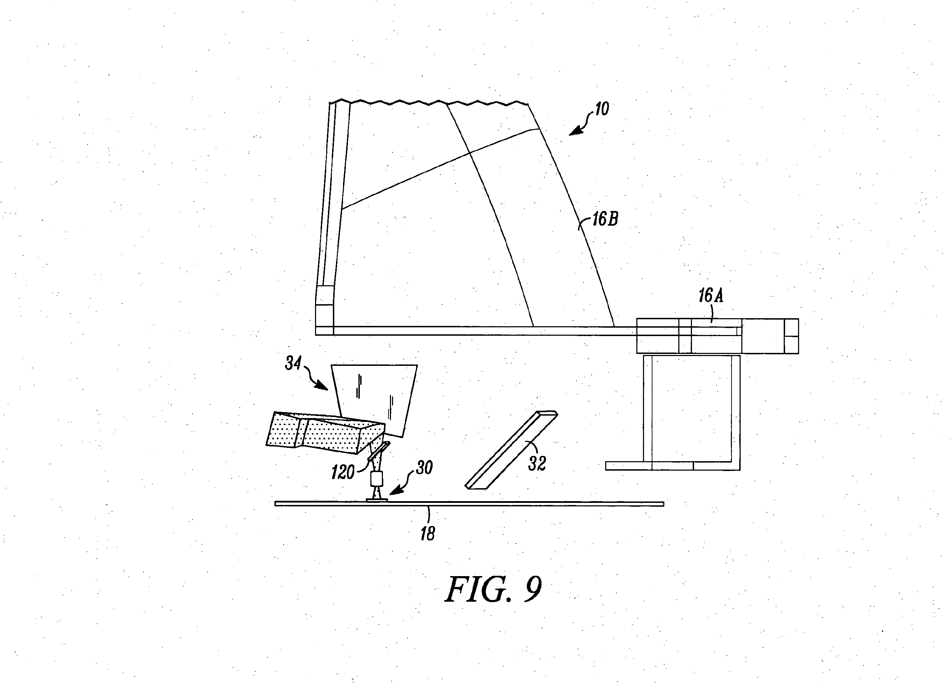

As best shown in FIGs. 2-3, a single solid-state imager 30 is supported on a printed circuit board 18 within the housing. The single imager 30 has a sensor array of sensors with a field of view diagrammatically shown by dashed lines. As described below, the field of view of the single imager 30 is routed simultaneously through the horizontal window 20 and the upright window 22 in the embodiment of FIGs. 2-7, and is successively routed through the horizontal window 20 and the upright window 22 in the embodiment of FIGs. 8 and 9.

The imager 30 preferably comprises a two-dimensional, charge coupled device (CCD) array, or a complementary metal oxide semiconductor (CMOS) array, of sensors of megapixel size, e.g., 1280 pixels wide x 960 pixels high. In a preferred embodiment, the field of view of the imager 30 measures about 15.2 degrees by 22.2 degrees. The imager 30 includes an imaging lens assembly 30A for capturing return light from the indicia and for projecting the captured return light onto the sensor array. The imager 30 may include, or be associated with, an illuminator for illuminating the indicia with illumination light from one or more illumination light sources, e.g., surface-mounted, light emitting diodes (LEDs) 30B. The LEDs 30B may either be closely adjacent the sensor array, or remote therefrom, as described below.

A controller 24 is a programmed microprocessor that is also mounted on the board 18 and is operative for controlling the illuminator 30B to illuminate the indicia 14, for controlling the imager 30 to detect the illumination light returning from the indicia and captured by the imaging lens assembly 30A over exposure time periods or successive frames to produce electrical signals indicative of the indicia being read, and for processing the electrical signals to image the indicia 14, and to decode the indicia when the indicia is a symbol. The illuminator 30B is preferably only operative during the exposure time period.

The imager 30 preferably has a global shutter so that the captured image will not be disturbed by motion of the indicia 14 relative to the window(s) during the exposure time period. The indicia 14 can be presented or swiped at speeds up to around 100 inches per second across any part of either window. For an imager to be able to read an indicium that is moving rapidly, the indicium must be brightly illuminated by the illuminators 30B so that a short exposure time can be used. Bright illumination light shining out of either window can be annoying or uncomfortable to the user, so the illumination light must not be directly viewable by the operator, or by a consumer standing nearby. A rolling or a mechanical shutter could also be employed.

In accordance with one aspect of this invention, an optical system is supported by the housing 16 and includes a first optical subsystem stationarily supported by the housing 16 and operative for directing at least a part of the field of view of the single imager 30 as one or more light collection regions passing through one of the windows, e.g., the horizontal window 20, and a second optical subsystem stationarily supported by the housing 16 and operative for directing at least a part of the field of view of the single imager 30 as one or more additional light collection regions passing through the other of the windows, e.g., the upright window 22.

By way of numerical example, the generally horizontal window 20 in a conventional bi-optical workstation 10 measures about four inches in width by about six inches in length, and the generally upright window 22 measures about six inches in width by about eight inches in length. The field of view of the imager 30 capturing return light from the indicia 14 through the windows 20, 22 does not inherently have these dimensions at the windows and, hence, the light collection regions must be sized, positioned and configured so that they match the dimensions of the respective window at the respective window, thereby enabling the indicia 14 to be reliably read when located anywhere in the scan zone at the respective window, as well as within a range of working distances therefrom.

The first optical subsystem is operative for asymmetrically splitting the field of view of the single imager 30 into two smaller light collection regions, in each of which return light from the indicia 14 is captured by the imager 30 through the horizontal window 20 from one side of the product 12, and into two larger light collection regions, in each of which return light from the indicia 14 is captured by the imager 30 through the horizontal window 20 from more than one side of the product 12. As described more fully below, each larger light collection region has a greater spatial volume than each smaller light collection region. Thus, one larger light collection region is customized to read the left side 12A and the bottom side 12E of the product 12; another larger light collection region is customized to read the right side 12B and the bottom side 12E of the product 12; and each smaller light collection region is customized to read the front side 12C of the product.

The first optical subsystem advantageously includes an optical splitter 34 located above the imager 30 for splitting the field of view into a pair of first equal subfields of view 40, 42 in a first split. Each first subfield of view 40, 42 measures about 7.6 degrees by 22.2 degrees. The optical splitter 34 is preferably a mirrored component having one reflecting surface 26 above one portion of the sensor array, and another reflecting surface 28 above another portion of the sensor array. As described below in connection with FIGs. 8-9, each reflecting surface 26, 28 overlies half of the sensor array, in which case, for the megapixel sensor array described above, each half is 1280 pixels wide x 480 pixels high. As described below, the reflecting surfaces 26, 28 lie in diverging planes so that the upper surface of the optical splitter 34 has a trapezoidal shape.

The first optical subsystem further includes a first pair of fold mirrors 44, 46 positioned in the first subfield of view 40 for splitting the first subfield of view 40 into a pair of second subfields of view 52, 54, as well as a second pair of fold mirrors 48, 50 positioned in the first subfield of view 42 for splitting the first subfield of view 42 into a pair of second subfields of view (not illustrated, but mirror symmetrical to 52, 54) in a second split.

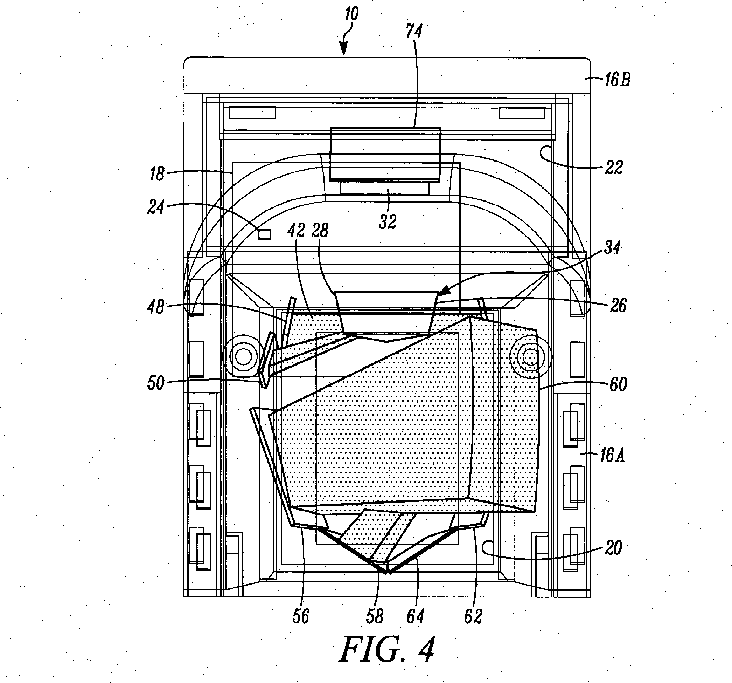

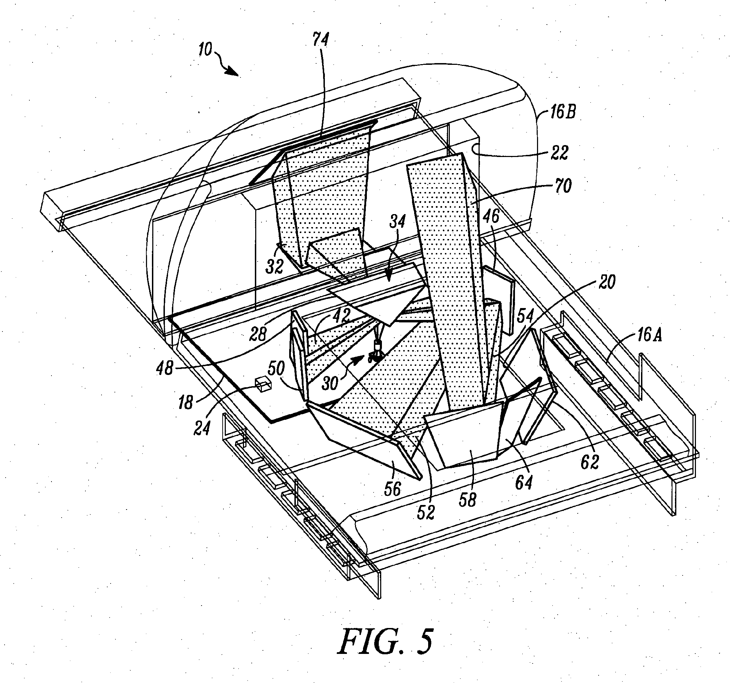

The first optical subsystem still further includes a first additional pair of fold mirrors 56, 58 respectively positioned in the second subfields of view 52, 54 for reflecting the second subfields of view 52, 54 as the aforementioned larger light collection region 60 (see FIG. 4) and the smaller light collection region 70 (see FIG. 5) through the horizontal window 20, as well as a second additional pair of fold mirrors 62, 64 respectively positioned in the second subfields of view for reflecting the second subfields of view as the aforementioned additional larger and smaller light collection regions (mirror symmetrical to 60 and 70 in FIGs. 4-5) through the horizontal window 20.

Thus, the first optical subsystem twice splits the field of view of the imager 30 as a result of said first and second splits into two of the smaller light collection regions 70, each measuring about 5.4 degrees by 7.6 degrees and two of the larger light collection regions 60, each measuring about 14.8 degrees by 7.6 degrees. All four of the light collection regions 60, 70 pass through the horizontal window 20 along different intersecting directions to read four sides of the product. All four of the light collection regions 60, 70 are derived from just the single imager 30, thereby significantly reducing workstation costs. The smaller and the larger light collection regions 70, 60 are appropriately sized to perform their different tasks. All four of the light collection regions 60, 70, together with the additional light collection region or regions described below that pass through the upright window 22, substantially fully occupy the scan zone. As a result, the scan zone does not have any dead areas in which indicia 14 cannot be read.

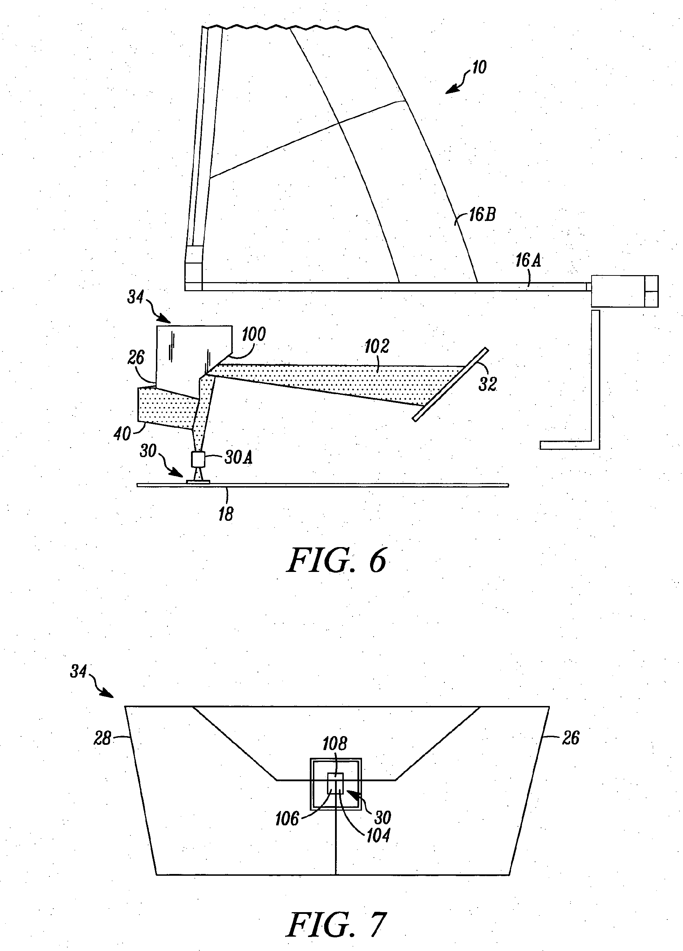

The second optical subsystem, in the first embodiment of FIGs. 2-7, includes a third stationary reflecting surface 100, as best seen in FIG. 6, at the rear of the aforementioned optical splitter 34 and located above still another portion of the sensor array for splitting the field of view of the single imager 30 into a third subfield of view 102. The rear of the optical splitter 34 is stepped, and the third reflecting surface 100 lies in an inclined plane tilted at an angle of about 45 degrees. The second optical subsystem includes one or more fold mirrors 32, 74 positioned relative to the third reflecting surface 100 for reflecting the third subfield of view 102 as an additional light collection region through the upright window 22. The fold mirror 32 is also tilted at an angle of about 45 degrees. The entire third subfield of view 102 may be reflected through the upright window 22 in order to cover the rear side 12D of the product 12 in a five-sided reading embodiment.

Alternatively, the third subfield of view may be split again by replacing the fold mirror 74 with a pair of fold mirrors in order to form a plurality of additional light collection regions, in which the top side 12F of the product is covered in a six-sided reading embodiment. Thus, indicia on the fifth and/or the sixth side of the product 12 are read. For the six-sided embodiment, it is desirable to increase the number of pixels in the imager 30, e.g., to two megapixels, by using an array measuring 1600 pixels by 1200 pixels. Six-sided reading is most commonly used in supermarkets. Department stores and mass merchandisers, however, often use five-sided readers. In the embodiment of FIGs. 2-7, all the light collection regions derived from the field of view of the single imager 30 simultaneous image the indicia through both windows 20, 22, thereby enhancing imaging responsiveness.

FIG. 7 diagrammatically depicts how the active area of the sensor array of the imager 30 is split by the first and second optical subsystems. The portion 104 of the sensor array is overlain by the reflecting surface 26; the portion 106 of the sensor array is overlain by the reflecting surface 28; and the portion 108 of the sensor array is overlain by the reflecting surface 100. The optical splitter 34 creates the vertical split line. The fold mirrors 44, 46 create the right horizontal split line. The fold mirrors 48, 50 create the left horizontal split line.

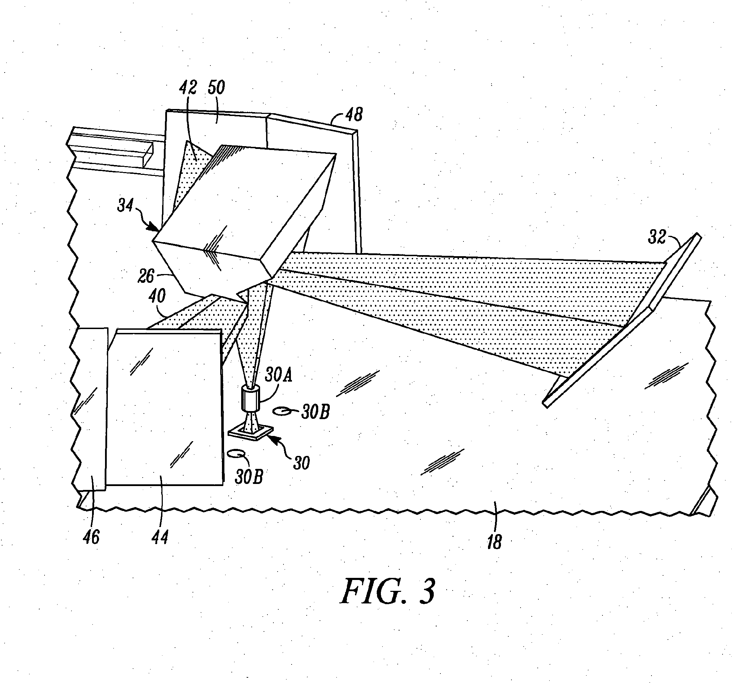

As noted above, the imager 30 in FIG. 3 has a set of LEDs 30B adjacent the sensor array for illuminating the indicia. The LED illumination systems include lenses (not shown) that concentrate the illumination light of each LED into a solid angle or illumination field that approximately matches the field of view of the imager. The illumination light for the imager 30 is reflected off of the same reflecting surfaces and mirrors as the field of view of the imager. Thus, the illumination fields substantially match, and occupy the same space as, the light collection regions 60, 70. Just as the light collection regions 60, 70 are deliberately angled away from the upright window 22, so too are the illumination fields directed off to the sides of the workstation so as to keep annoying reflections off the upright window away from the eyes of the user.

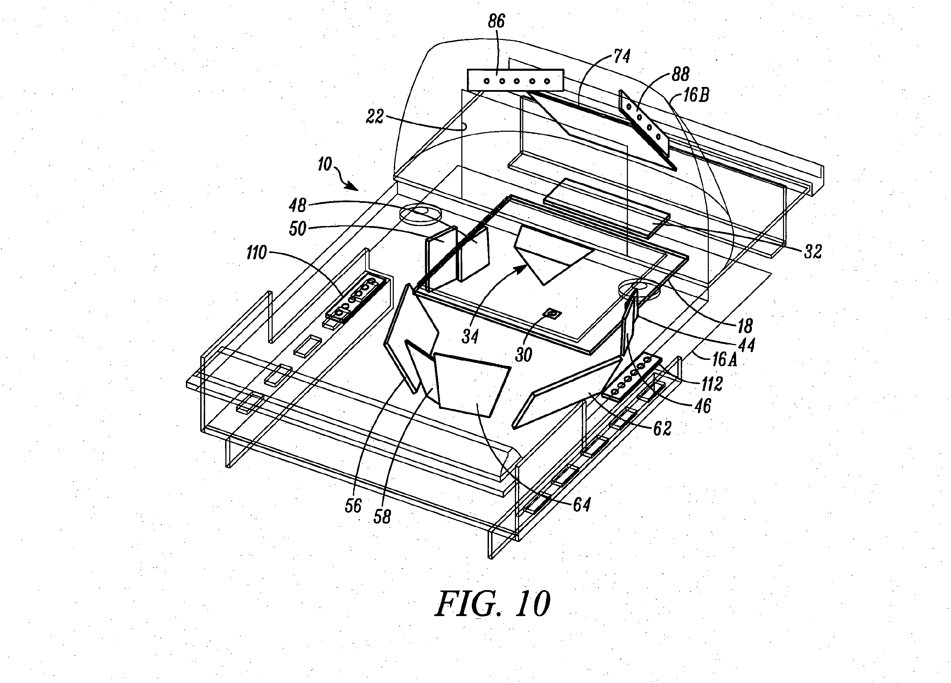

Similarly, as shown in FIG. 10, the illumination fields in the light collection region or regions passing through the upright window 22 are angled down so that any reflections off the horizontal window 20 are directed away from the eyes of the user. In FIG. 10, rather than locating the illumination LEDs 30B adjacent the sensor array of the imager 30, the illumination light sources are located remotely from the imager 30. For example, two rows of multiple illumination LEDs are respectively mounted on printed circuit boards 86, 88, which are located within the raised housing portion 16B at an elevation above the upright window 22 at opposite sides of the mirror 74. Each row of the illumination LEDs produces a more diffuse, less intense, spread-out distribution of the illumination light, as compared, for example, to the illumination LEDs 30B, which act as point sources. The boards 86, 88 are downwardly and forwardly tilted to direct the illumination fields away from one's eyes. The use of remote boards with rows of multiple illumination LEDs could also be used for the horizontal window 20 by positioning upwardly and sideways tilted boards 110, 112 underneath the horizontal window 20 at right and left sides of the board 18.

FIGs. 8-9 depict additional embodiments of the stationary optical system. The stationary optical system of FIGs. 8-9 is identical to the stationary optical system of FIGs. 2-7, except in two respects. First, the optical splitter 34 is not stepped or formed with the above-described third stationary reflecting surface 100. Second, a stationary mirror 120 is positioned in the field of view of the single imager 30 and located between the imager 30 and the unstepped optical splitter 34. The mirror 120 may be either a dichroic mirror or an electrochromic mirror. Each such mirror 120 has a reflecting state (FIG. 8) and a transmitting state (FIG. 9), as described below.

In the case of a dichroic mirror, it is advantageous if the aforementioned illuminators 86, 88 for the upright window 22 illuminate the indicia with illumination light of one wavelength, e.g., 612 nm, and if the aforementioned illuminators 110, 112 for the horizontal window 20 illuminate the indicia with illumination light of a different wavelength, e.g., 670 nm. It is further advantageous if the controller 24 alternately energizes the illuminators for the upright window 22 at a different time or during a different frame of the single imager 30 than the illuminators for the horizontal window 20. Thus, depending on the frequency of the illuminated light, the dichroic mirror 120 will either be in the transmitting state or in the reflecting state. In the reflecting state, the second optical subsystem is enabled, and the indicia is imaged through the upright window 22 during one frame. In the transmitting state, the first optical subsystem is enabled, and the indicia is imaged through the horizontal window 20 during a successive frame. In this dichroic embodiment, the light collection regions derived from the field of view of the single imager 30 successively image the indicia 14 through the windows 20, 22 during successive frames, but no moving component is used to delay processing.

In the case of an electrochromic mirror, it has a light transmission property or opacity that changes in response to an applied voltage. The opacity changes between different degrees of transparency. The controller 24 supplies the voltage to the electrochromic mirror 120 to change the light transmission property between the transmitting state in which the return light is transmitted to the single imager 30 and in which the indicia 14 is imaged through the horizontal window 20, and the reflecting state in which the return light is reflected to the single imager 30 and in which the indicia 14 is imaged through the upright window 22. Once the change in opacity is effected, no voltage is needed to maintain the change. In this electrochromic embodiment, the light collection regions derived from the field of view of the single imager 30 successively image the indicia 14 through the windows 20, 22 during successive frames, but no moving component is used to delay processing.

In use, an operator, such as a person working at a supermarket checkout counter, or a customer in a self checkout stand, processes the product 12 bearing the UPC symbol 14 thereon, past the windows 20, 22 by swiping the product 12 across a respective window, or by presenting the product 12 at the respective window. The symbol 14 may located on any of the top, bottom, right, left, front and rear, sides of the product 12, and the imager 30 will capture the illumination light reflected, scattered, or otherwise returning, either simultaneously or successively, from the symbol 14 through one or both windows 20, 22.

It will be understood that each of the elements described above, or two or more together, also may find a useful application in other types of constructions differing from the types described above.

While the invention has been illustrated and described as embodied in a point-of transaction workstation for electro-optically reading indicia by using a single imager, it is not intended to be limited to the details shown, since various modifications and structural changes may be made without departing in any way from the scope of the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention and, therefore, such adaptations should and are intended to be comprehended within the meaning and range of equivalence of the following claims.

What is claimed as new and desired to be protected by Letters Patent is set forth in the appended claims.

## Claims

1. A point-of-transaction workstation (10) for electro-optically imaging indicia (14) associated with products (12), comprising:
a housing (16);
a generally horizontal window (20) supported by the housing (16) in a generally horizontal plane, and another upright window (22) supported by the housing (16) in a generally upright plane that intersects the generally horizontal plane, the windows (20, 22) bounding a zone in which the indicia (14) are imaged;
a single, solid-state imager (30) supported by the housing (16) and having a sensor array of sensors to capture return light from the indicia (14) over a field of view;
an optical system including a first optical subsystem (34, 44, 46, 48, 50, 56, 58, 62, 64) stationarily supported by the housing (16) and operative for directing at least a part of the field of view of the single imager (30) as a first light collection region passing through one of the windows (20, 22), and a second optical subsystem (34, 32, 74) stationarily supported by the housing (16) and operative for directing at least another part of the field of view of the same single imager (30) as a second light collection region passing through the other of the windows (20, 22);
a controller (24) for controlling the single imager (30) and for processing captured return light in at least one of the light collection regions;
wherein the sensor array faces upwardly toward the generally horizontal plane; wherein the first optical subsystem includes an optical splitter (34) located above the imager (30) for splitting the field of view into a pair of first subfields of view (40, 42) in a first split, and wherein the optical splitter has a first reflecting surface (26) above one portion (104) of the sensor array (30), and a second reflecting surface (28) above another portion (106) of the sensor array; and
**characterized in that**:
the first optical subsystem includes two pairs of fold mirrors (44, 46; 48, 50), each pair of fold mirrors (44, 46; 48, 50) being positioned in a respective first subfield of view (40, 42) for splitting the respective first subfield of view (40, 42) into a pair of asymmetrical second subfields (52, 54) of view in a second split.

2. The workstation of claim 1, wherein the first optical subsystem includes two additional pairs of fold mirrors (56, 58; 62, 64), each additional pair of fold mirrors (56, 58; 62, 64) being positioned in a respective second subfield of view (52, 54) for reflecting the respective second subfield of view (52, 54) through the one window.

3. The workstation (10) of claim 2, wherein the first optical subsystem twice splits the field of view of the single imager (30) as a result of said first and second splits into two smaller light collection regions (70) of substantially equal smaller spatial volume and two larger light collection regions (60) of substantially equal greater spatial volume; wherein all four of the light collection regions (60, 70) pass through the one window (20) along different intersecting directions; wherein the second optical subsystem splits the field of view of the single imager (30) as still another light collection region passing through the other window (22); and wherein all five of the light collection regions cover at least five sides of a product (12).

4. The workstation of claim 1, wherein the second optical subsystem includes a third stationary reflecting surface (100) on the optical splitter (34) located above still another portion (108) of the sensor array for splitting the field of view into a third subfield of view (102), and a fold mirror (32, 74) positioned relative to the third reflecting surface (100) for reflecting the third subfield of view (102) through the other window (22).

5. The workstation (10) of claim 1, and further comprising a pair of illuminators (86, 88, 110, 112) for illuminating the indicia with illumination light of different wavelengths; wherein the controller (24) alternately energizes the illuminators (86, 88, 110, 112) during different frames of the single imager (30); and wherein the second optical subsystem includes a stationary dichroic mirror (120) positioned in the field of view of the single imager (30) and switchable between a transmitting state and a reflecting state as a function of the wavelength of the illumination light, the dichroic mirror (30) in the transmitting state passing the return light through one of the windows (20) to the imager in one of the frames, and the dichroic mirror (30) in the reflecting state passing the return light through the other of the windows (22) to the imager (30) in another of the frames.

6. The workstation (10) of claim 1, wherein the second optical subsystem includes a stationary electrochromic mirror (120) positioned in the field of view of the single imager (30) and having a light transmission property that changes in response to an applied voltage, and wherein the controller supplies the voltage to the electrochromic mirror (120) to change the light transmission property between a transmitting state in which the return light through one of the windows (20, 22) is passed to the single imager, and a reflecting state in which the return light through the other of the windows (20, 22) is passed to the single imager (30).

7. The workstation (10) of claim 1, wherein the first optical subsystem directs the first light collection region through one of the windows (20) simultaneously with the second optical subsystem directing the second light collection region through the other of the windows (22).

8. The workstation (10) of claim 1, wherein the first optical subsystem directs the first light collection region through one of the windows (20) at a different time than when the second optical subsystem directs the second light collection region through the other of the windows (22).

9. A method of electro-optically imaging indicia (14) associated with products (12) passing through a point-of-transaction workstation (10), comprising the steps of:
placing the indicia (14) in a zone bounded by a generally horizontal window (20) lying in a generally horizontal plane, and by another upright window (22) lying in a generally upright plane that intersects the generally horizontal plane;
capturing return light from the indicia (14) over a field of view of a sensor array of sensors of a single, solid-state imager (30);
directing at least a part of the field of view of the single imager (30) as a first light collection region passing through one of the windows (20) by a first optical subsystem that is stationarily supported by the workstation (10);
directing at least another part of the field of view of the same single imager (30) as a second light collection region passing through the other or the windows (22) by a second optical subsystem that is stationarily supported by the workstation (10); and
controlling the single imager (30) and processing captured return light in at least one of the light collection regions,
wherein the directing step by the first optical subsystem is performed by splitting the field of view into a pair of first subfields of view (40, 42) in a first split, and
**characterized in that**:
the directing step by the first optical subsystem is performed by positioning each pair of two pairs of fold mirrors (44, 46; 48, 50) in a respective first subfield of view for splitting the respective first subfield of view into a pair of asymmetrical second subfields (52, 54) of view in a second split.

10. The method of claim 9, wherein the directing step by the first optical subsystem is performed by positioning each pair of two additional pairs of fold mirrors (56, 58; 62, 64) in a respective second subfield (52, 54) of view for reflecting the respective second subfield of view (52, 54) through the one window.

11. The method of claim 10, wherein the directing step by the first optical subsystem is performed by twice splitting the field of view of the single imager (30) as a result of said first and second splits into two smaller light collection regions (70) of substantially equal smaller spatial volume and two larger light collection regions (60) of substantially equal greater spatial volume; and the step of passing all four of the light collection regions (60, 70) through the one window (20) along different intersecting directions; wherein the directing step by the second optical subsystem splits the field of view of the single imager (30) into still another light collection region; and the step of passing all five of the light collection regions through the other window (22) to cover at least five sides of a product (12).

12. The method of claim 9, wherein the directing step by the second optical subsystem is performed by splitting the field of view into a third subfield of view (102), and by reflecting the third subfield of view (102) through the other window (22).

13. The method of claim 9, and the step of illuminating the indicia with illumination light of different wavelengths during different frames of the single imager; wherein the directing step by the second optical subsystem is performed by positioning a stationary dichroic mirror (120) in the field of view of the single imager (30) for transmitting the illumination light of one wavelength to the single imager (30) in one of the frames, and for reflecting the illumination light of another wavelength to the single imager (30) in another of the frames.

14. The method of claim 9, wherein the directing step by the second optical subsystem is performed by positioning in the field of view of the single imager a stationary electrochromic mirror (120) having a light transmission property that changes in response to an applied voltage, and the step of supplying the voltage to the electrochromic mirror (120) to change the light transmission property between a transmitting state in which the return light through the one window (20) is transmitted to the single imager (30), and a reflecting state in which the return light through the other window (22) is reflected to the single imager (30).

15. The method of claim 9, wherein the directing steps by the first and second optical subsystems are performed simultaneously.

16. The method of claim 9, wherein the directing steps by the first and second optical subsystems are performed at different times.

## Patentansprüche

1. Transaktionspunkt-Arbeitsplatz (10) zur Abbildung von Markierungen (14), die zu Produkten (12) gehören, umfassend:
ein Gehäuse (16),
ein im Allgemeinen horizontales Fenster (20), das vom Gehäuse (16) in einer im Allgemeinen horizontalen Ebene getragen wird, und ein anderes, senkrechtes Fenster (22), das vom Gehäuse (16) in einer im Allgemeinen senkrechten Ebene getragen wird, welche die im Allgemeinen horizontale Ebene schneidet, wobei die Fenster (20, 22) eine Zone begrenzen, in der die Markierungen (14) abgebildet werden,
ein einzelnes Festkörper-Bildgerät (30), das vom Gehäuse (16) getragen wird und ein Sensorfeld aus Sensoren aufweist, um zurückgeworfenes Licht von den Markierungen (14) über ein Sichtfeld aufzufangen,
ein optisches System mit einem ersten optischen Teilsystem (34, 44, 46, 48, 50, 56, 58, 62, 64), das feststehend vom Gehäuse (16) getragen wird und zum Richten mindestens eines Teils des Sichtfeldes des einzelnen Bildgerätes (30) als ersten, durch eines der Fenster (20, 22) führenden lichtsammeinden Bereich dient, und mit einem zweiten optischen Teilsystem (34, 32, 74), das feststehend vom Gehäuse (16) getragen wird und zum Richten mindestens eines anderen Teils des Sichtfeldes desselben einzelnen Bildgerätes (30) als zweiten, durch das andere der Fenster (20, 22) führenden lichtsammelnden Bereich dient,
eine Steuerungsvorrichtung (24) zum Steuern des einzelnen Bildgerätes (30) und zum Verarbeiten von aufgefangenem zurückgeworfenem Licht in mindestens einem der lichtsammelnden Bereiche,
wobei das Sensorfeld nach oben zur im Allgemeinen horizontalen Ebene zeigt, wobei das erste optische Teilsystem einen oberhalb des Bildgerätes (30) angeordneten optischen Teiler (34) zum Teilen des Sichtfeldes in ein Paar von ersten Teilsichtfeldern (40, 42) in einer ersten Teilung beinhaltet und wobei der optische Teiler eine erste reflektierende Oberfläche (26) oberhalb eines Abschnitts (104) des Sensorfeldes (30) und eine zweite reflektierende Oberfläche (28) oberhalb eines anderen Abschnitts (106) des Sensorfeldes aufweist, und
**dadurch gekennzeichnet, dass**:
das erste optische Teilsystem zwei Paare von Klappspiegeln (44, 46; 48, 50) beinhaltet, wobei jedes Paar von Klappspiegeln (44, 46; 48, 50) in einem entsprechenden ersten Teilsichtfeld (40, 42) angeordnet ist, um das entsprechende erste Teilsichtfeld (40, 42) in einer zweiten Teilung in ein Paar von asymmetrischen zweiten Teilsichtfeldern (52, 54) zu teilen.

2. Arbeitsplatz nach Anspruch 1, wobei das erste optische Teilsystem zwei zusätzliche Paare von Klappspiegeln (56, 58; 62, 64) beinhaltet, wobei jedes zusätzliche Paar von Klappspiegeln (56, 58; 62, 64) in einem entsprechenden zweiten Teilsichtfeld (52, 54) angeordnet ist, um das entsprechende zweite Teilsichtfeld (52, 54) durch das eine Fenster zu reflektieren.

3. Arbeitsplatz (10) nach Anspruch 2, wobei das erste optische Teilsystem das Sichtfeld des einzelnen Bildgerätes (30) infolge der ersten und der zweiten Teilung zweimal in zwei kleinere lichtsammelnde Bereiche (70) von im Wesentlichen gleichem, kleinerem räumlichem Volumen und in zwei größere lichtsammelnde Bereiche (60) von im Wesentlichen gleichem, größerem räumlichem Volumen teilt, wobei alle vier der lichtsammelnden Bereiche (60, 70) entlang unterschiedlicher, sich schneidender Richtungen durch das Fenster (20) führen, wobei das zweite optische Teilsystem das Sichtfeld des einzelnen Bildgerätes (30) als noch ein anderer, durch das andere Fenster (22) führender lichtsammelnder Bereich teilt und wobei alle fünf der lichtsammelnden Bereiche mindestens fünf Seiten eines Produktes (12) erfassen.

4. Arbeitsplatz nach Anspruch 1, wobei das zweite optische Teilsystem am optischen Teiler (34) eine dritte feststehende reflektierende Oberfläche (100) oberhalb noch eines anderen Abschnitts (108) des Sensorfeldes zum Teilen des Sichtfeldes in ein drittes Teilsichtfeld (102) sowie einen im Verhältnis zur dritten reflektierenden Oberfläche (100) positionierten Klappspiegel (32, 74) zum Reflektieren des dritten Teilsichtfeldes (102) durch das andere Fenster (22) beinhaltet.

5. Arbeitsplatz (10) nach Anspruch 1, ferner ein Paar von Beleuchtungseinrichtungen (86, 88, 110, 112) zum Beleuchten der Markierungen mit Beleuchtungslicht unterschiedlicher Wellenlängen umfassend, wobei die Steuerungsvorrichtung (24) die Beleuchtungseinrichtungen (86, 88, 110, 112) während unterschiedlicher Rahmen des einzelnen Bildgerätes (30) abwechselnd betätigt und wobei das zweite optische Teilsystem einen feststehenden dichroitischen Spiegel (120) beinhaltet, der im Sichtfeld des einzelnen Bildgerätes (30) positioniert ist und in Abhängigkeit von der Wellenlänge des Beleuchtungslichts zwischen einem lichtdurchleitenden Zustand und einem reflektierenden Zustand umschaltbar ist, wobei der dichroitische Spiegel (30) im lichtdurchleitenden Zustand das zurückgeworfene Licht in einem der Rahmen durch eines der Fenster (20) zum Bildgerät führt und der dichroitische Spiegel (30) im reflektierenden Zustand das zurückgeworfene Licht in einem anderen der Rahmen durch das andere der Fenster (22) zum Bildgerät (30) führt.

6. Arbeitsplatz (10) nach Anspruch 1, wobei das zweite optische Teilsystem einen feststehenden elektrochromen Spiegel (120) beinhaltet, der im Sichtfeld des einzelnen Bildgerätes (30) positioniert ist und eine Lichtdurchleitungseigenschaft aufweist, die sich in Reaktion auf eine angelegte Spannung ändert, und wobei die Steuerungsvorrichtung die Spannung zum elektrochromen Spiegel (120) führt, um die Lichtdurchleitungseigenschaft zwischen einem durchleitenden Zustand, in dem das durch eines der Fenster (20, 22) zurückgeworfene Licht zum einzelnen Bildgerät geführt wird, und einem reflektierenden Zustand, in dem das durch das andere Fenster (20, 22) zurückgeworfene Licht zum einzelnen Bildgerät (30) geführt wird, zu ändern.

7. Arbeitsplatz (10) nach Anspruch 1, wobei das erste optische Teilsystem den ersten lichtsammelnden Bereich zu der gleichen Zeit durch eines der Fenster (20) richtet, zu der das zweite optische Teilsystem den zweiten lichtsammelnden Bereich durch das andere der Fenster (22) richtet.

8. Arbeitsplatz (10) nach Anspruch 1, wobei das erste optische Teilsystem den ersten lichtsammeinden Bereich zu einer anderen Zeit durch eines der Fenster (20) richtet als die, zu der das zweite optische Teilsystem den zweiten lichtsammelnden Bereich durch das andere der Fenster (22) richtet.

9. Verfahren zur elektrooptischen Abbildung von Markierungen (14), die zu Produkten (12) gehören, die durch einen Transaktionspunkt-Arbeitsplatz (10) geführt werden, folgende Schritte umfassend:
Platzieren der Markierungen (14) in einer Zone, die durch ein im Allgemeinen horizontales Fenster (20), das in einer im Allgemeinen horizontalen Ebene liegt, und durch ein anderes, senkrechtes Fenster (22), das in einer im Allgemeinen senkrechten, die im Allgemeinen horizontale Ebene schneidenden Ebene liegt, begrenzt wird,
Auffangen von zurückgeworfenem Licht von den Markierungen (14) über ein Sichtfeld eines Sensorfeldes von Sensoren eines einzelnen Festkörper-Bildgerätes (30),
Richten mindestens eines Teils des Sichtfeldes des einzelnen Bildgerätes (30) als ersten, durch eines der Fenster (20) führenden lichtsammelnden Bereich durch ein erstes optisches Teilsystem, das feststehend von dem Arbeitsplatz (10) getragen wird,
Richten mindestens eines anderen Teils des Sichtfeldes desselben einzelnen Bildgerätes (30) als zweiten, durch das andere der Fenster (22) führenden lichtsammelnden Bereich durch ein zweites optisches Teilsystem, das feststehend von dem Arbeitsplatz (10) getragen wird,
Steuern des einzelnen Bildgerätes (30) und Verarbeiten von aufgefangenem zurückgeworfenem Licht in mindestens einem der lichtsammelnden Bereiche,
wobei der Schritt des Richtens durch das erste optische Teilsystem durch Teilen des Sichtfeldes in ein Paar von ersten Teilsichtfeldern (40, 42) in einer ersten Teilung erfolgt, und
**dadurch gekennzeichnet, dass**:
der Schritt des Richtens durch das erste optische Teilsystem durch Anordnen jedes Paares von zwei Paaren von Klappspiegeln (44, 46; 48, 50) in einem entsprechenden ersten Teilsichtfeld erfolgt, um das entsprechende erste Teilsichtfeld in einer zweiten Teilung in ein Paar von asymmetrischen zweiten Teilsichtfeldern (52, 54) zu teilen.

10. Verfahren nach Anspruch 9, wobei der Schritt des Richtens durch das erste optische Teilsystem durch Anordnen jedes Paares von zwei zusätzlichen Paaren von Klappspiegeln (56, 58; 62, 64) in einem entsprechenden zweiten Teilsichtfeld (52, 54) erfolgt, um das entsprechende zweite Teilsichtfeld (52, 54) durch das eine Fenster zu reflektieren.

11. Verfahren nach Anspruch 10, wobei der Schritt des Richtens durch das erste optische Teilsystem durch zweimaliges Teilen des Sichtfeldes des einzelnen Bildgerätes (30) infolge der ersten und der zweiten Teilung in zwei kleinere lichtsammelnde Bereiche (70) von im Wesentlichen gleichem, kleinerem räumlichem Volumen und in zwei größere lichtsammelnde Bereiche (60) von im Wesentlichen gleichem, größerem räumlichem Volumen erfolgt und der Schritt des Führens aller vier der lichtsammeinden Bereiche (60, 70) durch das Fenster (20) entlang unterschiedlicher, sich schneidender Richtungen erfolgt, wobei der Schritt des Richtens durch das zweite optische Teilsystem das Sichtfeld des einzelnen Bildgerätes (30) in noch einen weiteren, lichtsammelnden Bereich teilt, und der Schritt des Führens aller fünf der lichtsammelnden Bereiche durch das andere Fenster (22), um mindestens fünf Seiten eines Produktes (12) zu erfassen.

12. Verfahren nach Anspruch 9, wobei der Schritt des Richtens durch das zweite optische Teilsystem durch Teilen des Sichtfeldes in ein drittes Teilsichtfeld (102) und durch Reflektieren des dritten Teilsichtfeldes (102) durch das andere Fenster (22) erfolgt.

13. Verfahren nach Anspruch 9, und der Schritt des Beleuchtens der Markierungen mit Beleuchtungslicht unterschiedlicher Wellenlängen während unterschiedlicher Rahmen des einzelnen Bildgerätes, wobei der Schritt des Richtens durch das zweite optische Teilsystem durch Anordnen eines feststehenden dichroitischen Spiegels (120) im Sichtfeld des einzelnen Bildgerätes (30) zum Durchleiten des Beleuchtungslichts einer Wellenlänge zum Bildgerät (30) und zum Reflektieren des Beleuchtungslichts einer anderen Wellenlänge zum einzelnen Bildgerät (30) in einem anderen der Rahmen erfolgt.

14. Verfahren nach Anspruch 9, wobei der Schritt des Richtens durch das zweite optische Teilsystem durch Anordnen eines feststehenden elektrochromen Spiegels (120) im Sichtfeld des einzelnen Bildgerätes mit einer Lichtdurchleitungseigenschaft erfolgt, die sich in Reaktion auf eine angelegte Spannung ändert, und der Schritt des Führens der Spannung zum elektrochromen Spiegel (120), um die Lichtdurchleitungseigenschaft zwischen einem durchleitenden Zustand, in dem das durch eines der Fenster (20) zurückgeworfene Licht zum einzelnen Bildgerät (30) geführt wird, und einem reflektierenden Zustand, in dem das durch das andere Fenster (22) zurückgeworfene Licht zum einzelnen Bildgerät (30) geführt wird, zu ändern.

15. Verfahren nach Anspruch 9, wobei die Schritte des Richtens durch das erste und das zweite optische Teilsystem gleichzeitig erfolgen.

16. Verfahren nach Anspruch 9, wobei die Schritte des Richtens durch das erste und das zweite optische Teilsystem zu unterschiedlichen Zeitpunkten erfolgen.

## Revendications

1. Station de travail de point de transaction (10) pour former de façon électro-optique l'image d'indices associés à des produits (12), comprenant :
un boîtier (16) ;
une fenêtre globalement horizontale (20) supportée par le boîtier (16) dans un plan globalement horizontal, et une autre fenêtre verticale (22) supportée par le boîtier (16) dans un plan globalement vertical qui coupe le plan globalement horizontal, les fenêtres (20, 22) délimitant une zone dans laquelle sont formées les image des indices (14) ;
un unique dispositif de formation d'image à l'état solide (30) supporté par le boîtier (16) et comportant une matrice de détecteurs pour capturer l'image de retour de l'indice (14) sur un champ de vision ;
un système optique comportant un premier sous-système optique (34, 44, 46, 48, 50, 56, 58, 62, 64) supporté de manière fixe par le boîtier (16) et agissant pour diriger au moins une partie du champ de vision de l'unique dispositif de formation d'image (30) en tant que première région de collecte de lumière traversant l'une des fenêtres (20, 22) et un second sous-système optique (34, 32, 74) supporté de manière fixe par le boîtier (16) et agissant pour diriger au moins une autre partie du champ de vision du même dispositif de formation d'image (30) en tant que seconde région de collecte de lumière traversant l'autre des fenêtres (20, 22) ;
un contrôleur (24) pour commander l'unique dispositif de formation d'image (30) et pour traiter la lumière en retour capturée dans au moins l'une des régions de collecte de lumière ;
dans laquelle la matrice de détecteurs est tournée vers le haut, vers le plan globalement horizontal ; dans laquelle le premier sous-système optique comporte un séparateur optique (34) situé au-dessus du dispositif de formation d'image (30) pour séparer le champ de vision en une paire de premiers sous-champs de vision (40, 42) dans une première séparation, et dans lequel le séparateur optique comporte une première surface réfléchissante (26) au-dessus d'une partie (104) de la matrice de détecteurs (30), et une deuxième surface réfléchissante (28) au-dessus d'une autre partie (106) de la matrice de détecteurs ; et
**caractérisée en ce que** :
le premier sous-système optique comporte deux paires de miroirs de renvoi (44, 46 ; 48, 50), chaque paire de miroirs de renvoi (44, 46 ; 48, 50) étant positionnée dans un premier sous-champ de vision respectif (40, 42) pour séparer le premier sous-champ de vision respectif (40, 42) en une paire de deuxièmes sous-champs de vision asymétriques (52, 54) dans une seconde séparation.

2. Station de travail selon la revendication 1, dans laquelle le premier sous-système optique comporte deux paires supplémentaires de miroirs de renvoi (56, 58 ; 62, 64), chaque paire supplémentaire de miroirs de renvoi (56, 58 ; 62, 64) étant positionnée dans un deuxième sous-champ de vision respectif (52, 54) pour réfléchir le deuxième sous-champ de vision respectif (52, 54) à travers la première fenêtre.

3. Station de travail (10) selon la revendication 2, dans laquelle le premier sous-système optique sépare deux fois le champ de vision de l'unique dispositif de formation d'image (30) en conséquence desdites première et seconde séparations en deux régions de collecte de lumière plus petites (70) de volume spatial inférieur sensiblement égal et deux régions de collecte de lumière plus grandes (60) de volume spatial supérieur sensiblement égal ; dans laquelle l'ensemble des quatre régions de collecte de lumière (60, 70) traverse la première fenêtre (20) dans des directions d'intersection différentes ; dans laquelle le second sous-système optique sépare le champ de vision de l'unique dispositif de formation d'image (30) en encore une autre région de collecte de lumière traversant l'autre fenêtre (22) ; et dans laquelle l'ensemble des cinq régions de collecte de lumière recouvre au moins cinq côtés d'un produit (12).

4. Station de travail selon la revendication 1, dans laquelle le second sous-système optique comporte une troisième surface réfléchissante fixe (100) sur le séparateur optique (34) situé au-dessus d'encore une autre partie (108) de la matrice de détecteurs pour séparer le champ de vision en un troisième sous-champ de vision (102) et un miroir replié (32, 74) positionné par rapport à la troisième surface réfléchissante (100) pour réfléchir le troisième sous-champ de vision (102) à travers l'autre fenêtre (22).

5. Station de travail (10) selon la revendication 1, et comprenant en outre une paire de dispositifs d'éclairage (86, 88, 110, 112) pour éclairer l'indice avec une lumière d'éclairage de longueur d'onde différente ; dans laquelle le contrôleur (24) excite alternativement les dispositifs d'éclairage (86, 88, 110, 112) durant différentes trames de l'unique dispositif de formation d'image (30) ; et dans laquelle le second sous-système optique comporte un miroir dichroïque fixe (120) positionné dans le champ de vision de l'unique dispositif de formation d'image (30) et pouvant être commuté entre un état de transmission et un état de réflexion en fonction de la longueur d'onde de la lumière d'éclairage, le miroir dichroïque (30) dans l'état de transmission transmettant la lumière en retour à travers l'une des fenêtres (20) vers le dispositif de formation d'image dans l'une des trames, et le miroir dichroïque (30) dans l'état de réflexion transmettant la lumière de retour à travers l'autre des fenêtres (22) vers le dispositif de formation d'image (30) dans une autre des trames.

6. Station de travail (10) selon la revendication 1, dans laquelle le second sous-système optique comporte un miroir électrochromique fixe (120) positionné dans le champ de vision de l'unique dispositif de formation d'image (30) et ayant une propriété de transmission de lumière qui varie en réponse à une tension appliquée, et dans laquelle le contrôleur fournit la tension au miroir électrochromique (120) pour modifier la propriété de transmission de lumière entre un état de transmission dans lequel la lumière en retour traversant l'une des fenêtres (20, 22) est transmise à l'unique dispositif de formation d'image et un état de réflexion dans lequel la lumière en retour traversant l'autre des fenêtres (20, 22) est transmise à l'unique dispositif de formation d'image (30).

7. Station de travail (10) selon la revendication 1, dans laquelle le premier sous-système optique dirige la première région de collecte de lumière à travers l'une des fenêtres (20) en même temps que le second sous-système optique dirige la seconde région de collecte de lumière à travers l'autre des fenêtres (22).

8. Station de travail (10) selon la revendication 1, dans laquelle le premier sous-système optique dirige la première région de collecte de lumière à travers l'une des fenêtres (20) à un moment différent de celui où le second sous-système optique dirige la seconde région de collecte de lumière à travers l'autre des fenêtres (22).

9. Procédé de formation électro-optique d'image d'indices (14) associés à des produits (12) traversant une station de travail de point de transaction (10), comprenant les étapes consistant à :
placer l'indice (14) dans une zone délimitée par une fenêtre globalement horizontale (20) située dans un plan globalement horizontal, et par une autre fenêtre verticale (22) située dans un plan globalement vertical qui coupe le plan globalement horizontal ;
capturer l'image de retour de l'indice (14) sur un champ de vision d'une matrice de détecteurs d'un unique dispositif de formation d'image à l'état solide (30) ;
diriger au moins une partie du champ de vision de l'unique dispositif de formation d'image (30) en tant que première région de collecte de lumière traversant l'une des fenêtres (20) au moyen d'un premier sous-système optique qui est supporté de manière fixe par la station de travail (10) ;
diriger au moins une autre partie du champ de vision de l'unique dispositif de formation d'image (30) en tant que seconde région de collecte de lumière traversant l'autre des fenêtres (22) par un second sous-système optique qui est supporté de manière fixe par la station de travail (10) ; et
commander l'unique dispositif de formation d'image (30) et traiter la lumière en retour capturée dans au moins l'une des régions de collecte de lumière ;
dans lequel l'étape de direction par le premier sous-système optique est réalisée en séparant le champ de vision en une paire de premiers sous-champs de vision (40, 42) dans une première séparation, et
**caractérisé en ce que** :
l'étape de direction par le premier sous-système optique est réalisée en positionnant chaque paire de deux paires de miroirs de renvoi (44, 46 ; 48, 50) dans un premier sous-champ de vision respectif pour séparer le premier sous-champ de vision respectif en une paire de deuxièmes sous-champs de vision asymétriques (52, 54) dans une seconde séparation.

10. Procédé selon la revendication 9, dans lequel l'étape de direction par le premier sous-système optique est réalisée en positionnant chaque paire de deux paires supplémentaires de miroirs de renvoi (56, 58 ; 62, 64) dans un deuxième sous-champ de vision respectif (52, 54) pour réfléchir le deuxième sous-champ de vision respectif (52, 54) à travers la première fenêtre.

11. Procédé selon la revendication 10, dans lequel l'étape de direction par le premier sous-système optique est réalisée en séparant deux fois le champ de vision de l'unique dispositif de formation d'image (30) en conséquence desdites première et seconde séparations en deux régions de collecte de lumière plus petites (70) de volume spatial inférieur sensiblement égal et deux régions de collecte de lumière plus grandes (60) de volume spatial supérieur sensiblement égal ; et l'étape de transmission de l'ensemble des quatre régions de collecte de lumière (60, 70) à travers la première fenêtre (20) dans des directions d'intersection différentes ; dans lequel l'étape de direction par le second sous-système optique sépare le champ de vision de l'unique dispositif de formation d'image (30) en encore une autre région de collecte de lumière ; et l'étape de transmission de l'ensemble des cinq régions de collecte de lumière à travers l'autre fenêtre (22) pour recouvrir au moins cinq côtés d'un produit (12).

12. Procédé selon la revendication 9, dans lequel l'étape de direction par le second sous-système optique est réalisée en séparant le champ de vision en un troisième sous-champ de vision (102) et en réfléchissant le troisième sous-champ de vision (102) à travers l'autre fenêtre (22).

13. Procédé selon la revendication 9, et l'étape d'éclairage de l'indice avec une lumière d'illumination de longueurs d'onde différentes durant différentes trames de l'unique dispositif de formation d'image, dans lequel l'étape de direction par le second sous-système optique est réalisée en positionnant un miroir dichroïque fixe (120) dans le champ de vision de l'unique dispositif de formation d'image (30) pour transmettre la lumière d'éclairage d'une longueur d'onde à l'unique dispositif de formation d'image (30) dans l'une des trames, et pour réfléchir la lumière d'éclairage d'une autre longueur d'onde vers l'unique dispositif de formation d'image (30) dans une autre des trames.

14. Procédé selon la revendication 9, dans lequel l'étape de direction par le second sous-système optique est réalisée en positionnant dans le champ de vision de l'unique dispositif de formation d'image un miroir électrochromique fixe (120) ayant une propriété de transmission de lumière qui varie en réponse à une tension appliquée, et l'étape de fourniture de la tension au miroir électrochromique (120) pour modifier la propriété de transmission de lumière entre un état de transmission dans lequel la lumière en retour traversant la première fenêtre (20) est transmise à l'unique dispositif de formation d'image (30) et un état de réflexion dans lequel la lumière en retour traversant l'autre fenêtre (22) est réfléchie vers l'unique dispositif de formation d'image (30).

15. Procédé selon la revendication 9, dans lequel les étapes de direction par les premier et second sous-systèmes optiques sont réalisées simultanément.

16. Procédé selon la revendication 9, dans lequel les étapes de direction par les premier et second sous-systèmes optiques sont réalisées à des moments différents.
